# EUROPÄISCHE PATENTSCHRIFT

(11) **EP 4 204 632 B1**
(45) Veröffentlichungstag und Bekanntmachung des Hinweises auf die Patenterteilung: **17.07.2024**
(21) Anmeldenummer: 21805898.0
(22) Anmeldetag: 02.11.2021
(51) Int. Cl.: E03B 5/00, E03B 7/02, E03B 7/07, G05B 13/04, G05B 17/02

(54) **STEUERUNG EINES WASSERVERSORGUNGSSYSTEMS**
CONTROL OF A WATER SUPPLY SYSTEM
COMMANDE D'UN SYSTÈME D'ALIMENTATION EN EAU

(30) Priorität: 27.11.2020 EP 20210299
(43) Veröffentlichungstag der Anmeldung: 05.07.2023
(73) Patentinhaber: Siemens Aktiengesellschaft, 80333 München (DE)
(72) Erfinder: HELD, Harald, 85461 Bockhorn (DE); HÜLSMANN, Guido, 90562 Heroldsberg (DE); SOHR, Annelie, 81929 München (DE)
(74) Vertreter: Siemens Patent Attorneys
(86) Internationale Anmeldenummer: PCT/EP2021/080354
(87) Internationale Veröffentlichungsnummer: WO 2022/111950

(56) Entgegenhaltungen:
- US-A1- 2017 299 123
- COULBECK B ET AL: "A HIERARCHICAL APPROACH TO OPTIMIZED CONTROL OF WATER DISTRIBUTION SYSTEMS: PART I DECOMPOSITION KEY WORDS Decomposition Multi-level control structures Optimal control of large-scale systems Water distribution systems Computer applications", OPTIMAL CONTROL APPLICATIONS & METHODS, vol. 9, 1 January 1988 (1988-01-01), pages 51 - 61, XP055801177
- COULBECK B ET AL: "A HIERARCHICAL APPROACH TO OPTIMIZED CONTROL OF WATER DISTRIBUTION SYSTEMS: PART II. LOWER-LEVEL ALGORITHM", OPTIMAL CONTROL APPLICATIONS & METHODS, vol. 9, 1 January 1988 (1988-01-01), pages 109 - 126, XP055801186, DOI: 10.1002/oca.4660090202
- JENS BURGSCHWEIGER ET AL: "Optimization models for operative planning in drinking water networks", OPTIMIZATION AND ENGINEERING ; INTERNATIONAL MULTIDISCIPLINARY JOURNAL TO PROMOTE OPTIMIZATIONAL THEORY & APPLICATIONS IN ENGIN, KLUWER ACADEMIC PUBLISHERS, BO, vol. 10, no. 1, 14 February 2008 (2008-02-14), pages 43 - 73, XP019685910, ISSN: 1573-2924

## Beschreibung

Die Erfindung betrifft ein computerimplementiertes Verfahren und eine Vorrichtung zur Steuerung einer Druck- und Flussverteilung eines Wasserversorgungssystems sowie ein Computerprogrammprodukt zur Durchführung des Verfahrens.

Ein Betrieb eines Wasserversorgungssystems, wie z.B. eines Wassernetzwerks oder einer Pipeline, benötigt Entscheidungen über den Betrieb auf verschiedenen Ebenen. Auf der Netzwerk-bzw. Systemebene wird in der Regel durch eine zentrale Instanz vorgegeben, welche Pumpstation des Wasserversorgungssystems welchen Druck ausgangsseitig aufbauen soll, um die gewünschte Flussverteilung im Wasserversorgungssystem zu erzielen. Dabei sind insbesondere die Anforderungen an die Tanks bezüglich der zulässigen Wasserstände, an das Gesamtsystem bezüglich der zulässigen Druckverteilungen, an die Pumpstationen bezüglich der zulässigen Energieverbräuche berücksichtigt werden, und/oder die prognostizierte Wasserabnahmen durch die Verbraucher zu bedienen. Änderungen der Wasserstände in Tanks beeinflussen dabei wiederum das Druck- und/oder Flussverhalten des Gesamtsystems. Auf Ebene der einzelnen Pumpstationen ist insbesondere zu entscheiden, welche Pumpen dann tatsächlich betrieben werden sollen und mit welcher Geschwindigkeit, um den geforderten Ausgangsdruck aufzubauen. Typischerweise wird ein Wasserversorgungssystems manuell oder regelbasiert betrieben. Dies kann allerdings ressourcenintensiv sein.

Aus Coulbeck et al. 1988 "A hierarchical approach to optimized control of water distribution systems: Part I Decomposition" (OPTIMAL CONTROL APPLICATIONS & METHODS; vol.: 9; pp.: 51-61) and Coulbeck et al. 1988 "A hierarchical approach to optimized control of water distribution systems: Part II: Lower-Level Algorithm" (OPTIMAL CONTROL APPLICATIONS & METHODS; vol.: 9; pp.: 109-126; DOI: 10.1002/oca.4660090202) einen hierarchischen Ansatz für eine optimierte Steuerung von Wasserverteilungssystemen, wobei vorgeschlagen wird, das System in verschiedene, hierarchisch gegliederte Optimierungsebenen einzuteilen: eine obere Ebene zur dynamischen Optimierung des Reservoirs, eine Zwischenebene für die statische Optimierung der Quellenextraktion und eine untere Ebene für die statische Optimierung der einzelnen Quellen, wobei auf jeder Ebene die Optimierungsergebnisse der unteren Ebene berücksichtigt werden. Aus Burgschweiger et al. 2008 "Optimization models for operative planning in drinking water networks" (OPTIMIZATION AND ENGINEERING; INTERNATIONAL MULTIDISCIPLINARY JOURNAL TO PROMOTE OPTIMIZATIONAL THEORY & APPLICATIONS IN ENGIN; KLUWER ACADEMIC PUBLISHERS; vol.: 10; no.: 1; pp.: 43-73; XP019685910; ISSN: 1573-2924). Aus 2017/299123 A1 ist eine Optimierung von einem Pumpenbetrieb für Pipelines für verschiedene Flüssigkeitstypen mit verschiedenen Dichten und Viskositäten bekannt, wobei in Abhängigkeit des jeweiligen Flüssigkeitstyps effiziente Pumpen selektiert werden.

Es ist daher eine Aufgabe der Erfindung, eine Steuerung eines Wasserversorgungssystems zu verbessern.

Die Aufgabe wird durch die in den unabhängigen Ansprüchen beschriebenen Maßnahmen gelöst. In den abhängigen Ansprüchen sind vorteilhafte Weiterbildungen der Erfindung dargestellt.

Gemäß einem ersten Aspekt betrifft die Erfindung ein computerimplementiertes Verfahren zur Steuerung einer Druck- und Flussverteilung eines Wasserversorgungssystems, das eine Vielzahl von Pumpstationen umfasst, mit den Verfahrensschritten:
(a) Einlesen eines computergestützten Hydraulikmodells des Wasserversorgungssystems, wobei das computergestützte Hydraulikmodell eingerichtet ist, eine zeitabhängige Druck- und Flussverteilung des Wasserversorgungssystems abzubilden,
(b) Ermitteln von ressourcenoptimierten Druck- und Flusssollwerten für die Pumpstationen des Wasserversorgungssystems für einen vorgegebenen Prognosezeitraum anhand des computergestützten Hydraulikmodells mittels eines ersten Optimierungsverfahrens,
(c) Einlesen eines Pumpenmodells für eine Pumpstation, wobei das Pumpenmodell eingerichtet ist, ein Betriebsverhalten von Pumpvorrichtungen der Pumpstation abzubilden,
(d) Ermitteln von ressourcenoptimierten Betriebsparametern für die Pumpvorrichtungen der Pumpstation anhand des Pumpenmodells zu einem vorgegebenen Zeitpunkt mittels eines zweiten Optimierungsverfahrens in Abhängigkeit des Druck- und Flusssollwerts dieser Pumpstation für den vorgegebenen Zeitpunkt zeitlich nach dem Verfahrensschritt des Ermittelns (S2) von ressourcenoptimierten Druck- und Flusssollwerten für die Pumpstationen, und
(e) Ausgeben der ressourcenoptimierten Betriebsparametern zum Steuern der Pumpvorrichtungen der Pumpstation, wobei mittels des zweiten Optimierungsverfahrens ein Effizienzwert der Pumpstation ermittelt wird, das computergestützte Hydraulikmodell (HM) anhand des Effizienzwerts der Pumpstation aktualisiert und zur Ermittlung der ressourcenoptimierten Druck- und Flusssollwerte für die Pumpstationen des Wasserversorgungssystems genutzt wird.

Unter "rechnergestützt" oder "computergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter einem "Modul" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder realisieren.

Unter einem "Wasserversorgungssystem" kann insbesondere ein Wasserversorgungsnetz oder eine Pipeline verstanden werden. Das Wasserversorgungssystem umfasst insbesondere eine Vielzahl von Pumpstationen, die wiederum eine Vielzahl von Pumpen/Pumpvorrichtungen umfassen, und eine Vielzahl von Tanks bzw. Behältern. Die Werte der Flüsse und Drücke im Wasserversorgungssystem verändern sich insbesondere durch die Entnahmen durch Verbraucher und durch Befüllen der Tanks, wobei aber Grenzwertfüllstände eingehalten werden sollen.

Unter einem "Hydraulikmodell" kann insbesondere ein computergestütztes Modell verstanden werden, das eine zeitabhängige Druck- und Flussverteilung des Wasserversorgungssystems in Abhängigkeit vom Betrieb des Systems abbildet. Insbesondere kann mittels des Hydraulikmodells das Betriebsverhalten der Pumpstationen und Behälteranlagen, die Entnahmen aus dem System (durch die Verbraucher) und/oder die Einspeisungen aus Reservoirs abgebildet werden. Das Hydraulikmodell umfasst insbesondere Modelle für alle relevanten Komponenten des Wasserversorgungssystems, wie z.B. Rohre, Behälter, Abnehmer, Reservoirs, Ventile, Pumpstationen. Das Hydraulikmodell umfasst vorzugsweise einfache Ersatzmodelle, um jeweilige Pumpstationen zu modellieren und um eine Optimierung der Druck- und Flussverteilung des Wasserversorgungssystems zu beschleunigen. Ein Ersatzmodell kann beispielsweise ein Regressionsmodell sein. Die Pumpstationen bzw. deren Pumpeffizienz/verhalten werden somit nicht im Detail modelliert.

Unter "ressourcenoptimierten Druck- und Flusssollwerten" können im Zusammenhang mit der Erfindung insbesondere Druck- und Flusswerte für eine Pumpstation verstanden werden, für deren Einhaltung die Pumpstation energieeffizient/mit minimaler Energie und/oder kosteneffizient/kostengünstig betrieben wird.

Unter einem "Optimierungsverfahren" kann im Zusammenhang mit der Erfindung insbesondere ein computergestütztes Optimierungsverfahren verstanden werden. Es können insbesondere bekannte Optimierungsverfahren genutzt werden.

Unter einem "Pumpenmodell" kann insbesondere eine Pumpenkurve oder Pumpenkennlinie, die das Betriebsverhaltens einer Pumpvorrichtung beschreibt. Das Pumpenmodell beschreibt insbesondere die Charakteristiken einer Pumpe bzgl. Hydraulik und Effizienz. Eine Pumpenkennlinie repräsentiert beispielsweise das Verhältnis zwischen einer Förderhöhe und einem Förderstrom.

Unter einem "Betriebsparameter" für eine Pumpvorrichtung kann beispielsweise ein Betriebszustand, wie z.B. "An"/"Aus" (an-/ausgeschaltet), und/oder eine Geschwindigkeit, mit der die Pumpvorrichtung betrieben wird, verstanden werden.

Es ist ein Vorteil der vorliegenden Erfindung, einen energie- und/oder kosteneffizienten Betrieb des Wasserversorgungssystems zu ermöglichen. Es werden mittels eines ersten Optimierungsverfahrens auf einer oberen/ersten Optimierungsebene optimierte Druck- und Flusswerte für einzelne Pumpstationen des Wasserversorgungssystems bestimmt. Diese erste Optimierung erfolgt vorzugsweise für einen vorgegebenen Prognosezeitraum.

Nachfolgend wird auf einer unteren/zweiten Optimierungsebene mittels eines zweiten Optimierungsverfahrens ein ressourcenoptimierter Betrieb der einzelnen Pumpvorrichtungen der jeweiligen Pumpstationen in Abhängigkeit der vorab ermittelten optimierten Druck- und Flusswerte der jeweiligen Pumpstation bestimmt. Diese zweite Optimierung erfolgt vorzugsweise zu einem aktuellen Zeitpunkt. Insbesondere kann bei der zweiten Optimierung zunächst ermittelt werden, welche Pumpvorrichtungen einer Pumpstation betrieben werden sollen.

Das Optimierungsproblem wird somit auf zwei Ebenen gelöst. Außerdem können die Pumpstationen des Wasserversorgungssystems beim ersten Optimierungsschritt weniger detailliert/grob modelliert werden, wie z.B. durch Ersatzmodelle. Eine detaillierte Modellierung erfolgt im zweiten Optimierungsschritt. Somit lassen sich auf Basis einer Prognose für den Betrieb des Wasserversorgungssystems Betriebsparameter für den Betrieb der Pumpvorrichtungen einer Pumpstation zum aktuellen Zeitpunkt ermitteln.

Es kann das Hydraulikmodell in Abhängigkeit der Ergebnisse des zweiten Optimierungsverfahrens aktualisiert werden. Insbesondere kann ein Regressionsmodell einer jeweiligen Pumpstation derart aktualisiert werden. Damit kann außerdem eine Konsistenz zwischen den beiden Optimierungsebenen erzielt werden.

In einer vorteilhaften Ausführungsform des computerimplementierten Verfahrens können die ressourcenoptimierten Druck- und/oder Flusssollwerte der Pumpstation als Randbedingungen für das zweite Optimierungsverfahren genutzt werden.

So kann eine Konsistenz zwischen den beiden Optimierungsebenen durch die Übergabe der Fluss- und Drucksollwerte von der oberen zur unteren Ebene erzielt werden.

In einer vorteilhaften Ausführungsform des computerimplementierten Verfahrens können die Betriebsparameter für die Pumpvorrichtungen derart ermittelt werden, dass die ressourcenoptimierten Druck- und Flusssollwerte der Pumpstation zum vorgegebenen Zeitpunkt erfüllt sind.

So kann das Ergebnis aus der ersten Optimierung genutzt werden, um das Betriebsverhalten der Pumpvorrichtungen der jeweiligen Pumpstationen im Detail zu optimieren.

In einer Ausführungsform des computerimplementierten Verfahrens können einzelne Pumpvorrichtungen der Pumpstation in Abhängigkeit des ermittelten Druck- und Flusssollwerts dieser Pumpstation selektiert werden und lediglich für die selektierten Pumpvorrichtungen ressourcenoptimierte Betriebsparameter ermittelt werden.

Vorzugsweise wird lediglich eine bestimmte Anzahl von Pumpvorrichtungen einer Pumpstation in Betrieb genommen, um einen ressourcenoptimierten Betrieb zu erzielen.

In einer vorteilhaften Ausführungsform des computerimplementierten Verfahrens können die Verfahrensschritte (c) bis (e) für jede Pumpstation des Wasserversorgungssystems durchgeführt werden.

Vorzugsweise wird die zweite Optimierung für jede Pumpstation durchgeführt, so dass ressourcenoptimierte Betriebsparameter für Pumpvorrichtungen jeder Pumpstation ermittelt werden.

In einer Ausführungsform des computerimplementierten Verfahrens können die Verfahrensschritte (b) bis (d) nach einem vorgegebenen Zeitschritt iteriert werden.

Damit kann auf dynamische Änderungen im Wasserversorgungsystem schnell reagiert werden. Für den zweiten Optimierungsschritt zu einem aktuellen oder vorgegeben Zeitpunkt wird somit eine aktuelle Prognose aus dem ersten Optimierungsschritt genutzt.

In einer Ausführungsform des computerimplementierten Verfahrens können Pumpstationen des Wasserversorgungssystems im computergestützten Hydraulikmodell des Wasserversorgungssystems mittels Ersatzmodellen abgebildet werden.

Insbesondere kann ein Betriebsverhalten, z.B. eine Pumpeffizienz, einer Pumpstation mittels Ersatzmodell abgebildet werden. Die Pumpstationen sind somit vorzugsweise auf der oberen Optimierungsebene nicht im Detail modelliert, sondern werden durch weniger komplexe Modelle abgebildet.

In einer Ausführungsform des computerimplementierten Verfahrens kann das Pumpenmodell Pumpenkennlinien der Pumpvorrichtungen umfassen.

In einer Ausführungsform des computerimplementierten Verfahrens können die Pumpvorrichtungen der Pumpstation mittels der ressourcenoptimierten Betriebsparameter gesteuert werden.

Gemäß einem zweiten Aspekt betrifft die Erfindung eine Vorrichtung zur Steuerung einer Druck- und Flussverteilung eines Wasserversorgungssystems, das eine Vielzahl von Pumpstationen umfasst, umfassend
- eine erste Schnittstelle, die derart eingerichtet ist, ein computergestütztes Hydraulikmodell des Wasserversorgungssystems einzulesen, wobei das computergestützte Hydraulikmodell eingerichtet ist, eine zeitabhängige Druck- und Flussverteilung des Wasserversorgungssystems abzubilden,
- ein erstes Optimierungsmodul, das derart eingerichtet ist, ressourcenoptimierte Druck- und Flusssollwerte für die Pumpstationen des Wasserversorgungssystems für einen vorgegebenen Prognosezeitraum anhand des computergestützten Hydraulikmodells mittels eines ersten Optimierungsverfahrens zu ermitteln,
- eine zweite Schnittstelle, die derart eingerichtet ist, ein Pumpenmodell für eine Pumpstation einzulesen, wobei das Pumpenmodell eingerichtet ist, ein Betriebsverhalten von Pumpvorrichtungen der Pumpstation abzubilden,
- ein zweites Optimierungsmodul, das derart eingerichtet ist, ressourcenoptimierte Betriebsparameter für die Pumpvorrichtungen der Pumpstation anhand des Pumpenmodells zu einem vorgegebenen Zeitpunkt mittels eines zweiten Optimierungsverfahrens in Abhängigkeit des Druck- und Flusssollwerts dieser Pumpstation für den vorgegebenen Zeitpunkt zeitlich nach dem Ermitteln von ressourcenoptimierten Druck- und Flusssollwerten für die Pumpstationen durch das erste Optimierungsmodul, zu ermitteln,
   und
- ein Ausgabemodul, das derart eingerichtet ist, die ressourcenoptimierten Betriebsparameter zum Steuern der Pumpvorrichtungen der Pumpstation auszugeben, wobei mittels des zweiten Optimierungsverfahrens ein Effizienzwert der Pumpstation ermittelt wird, das computergestützte Hydraulikmodell (HM) anhand des Effizienzwerts der Pumpstation aktualisiert und zur Ermittlung der ressourcenoptimierten Druck- und Flusssollwerte für die Pumpstationen des Wasserversorgungssystems genutzt wird.

Des Weiteren betrifft die Erfindung ein Computerprogrammprodukt, das direkt in einen programmierbaren Computer ladbar ist, umfassend Programmcodeteile, die bei der Ausführung des Programms durch einen Computer diesen veranlassen, die Schritte eines erfindungsgemäßen Verfahrens auszuführen.

Ein Computerprogrammprodukt kann beispielsweise auf einem Speichermedium, wie z.B. Speicherkarte, USB-Stick, CD-ROM, DVD, ein nichtflüchtiger/dauerhaftes Speichermedium (engl. Non-transitory storage Medium) oder auch in Form einer herunterladbaren Datei von einem Server in einem Netzwerk bereitgestellt oder geliefert werden.

Ausführungsbeispiele des erfindungsgemäßen Verfahrens und der erfindungsgemäßen Vorrichtung sind in den Zeichnungen beispielhaft dargestellt und werden anhand der nachfolgenden Beschreibung näher erläutert. Es zeigen:
- Fig. 1:: ein Ausführungsbeispiel des erfindungsgemäßen Verfahrens;
- Fig. 2:: ein weiteres Ausführungsbeispiel des erfindungsgemäßen Verfahrens; und
- Fig. 3:: ein Ausführungsbeispiel der erfindungsgemäßen Vor richtung.

Einander entsprechende Teile sind in allen Figuren mit den gleichen Bezugszeichen versehen.

Insbesondere zeigen die nachfolgenden Ausführungsbeispiele lediglich beispielhafte Realisierungsmöglichkeiten, wie insbesondere solche Realisierungen der erfindungsgemäßen Lehre aussehen könnten, da es unmöglich und auch für das Verständnis der Erfindung nicht zielführend oder notwendig ist, all diese Realisierungsmöglichkeiten zu benennen.

Auch sind insbesondere einem (einschlägigen) Fachmann in Kenntnis des/der Verfahrensanspruchs/Verfahrensansprüche alle im Stand der Technik üblichen Möglichkeiten zur Realisierung der Erfindung selbstverständlich bekannt, sodass es insbesondere einer eigenständigen Offenbarung in der Beschreibung nicht bedarf.

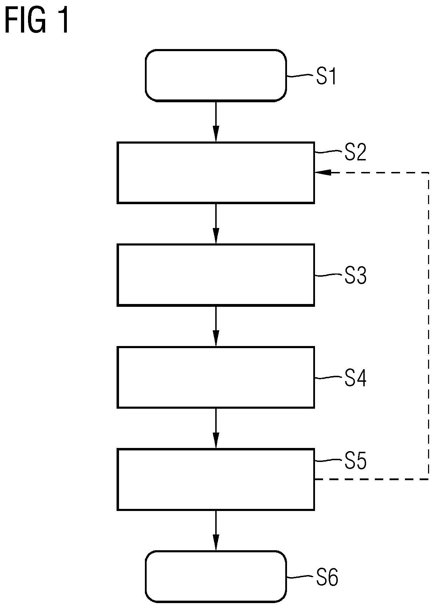

Figur 1 zeigt ein Ausführungsbeispiel des erfindungsgemäßen Verfahrens zur Steuerung einer Druck- und Flussverteilung eines Wasserversorgungssystems als Flussdiagramm. Das Wasserversorgungssystem umfasst eine Vielzahl von Pumpstationen, die jeweils eine Vielzahl von Pumpen/Pumpvorrichtungen umfassen, und Behälter, um Druck und Fluss im gesamten System so zu regulieren, so dass der Druck und Fluss beim Verbraucher Sollwerte erfüllt.

Im ersten Schritt S1 des Verfahrens wird ein computergestütztes Hydraulikmodell des Wasserversorgungssystems eingelesen. Das computergestützte Hydraulikmodell bildet eine zeitabhängige Druck- und Flussverteilung des Wasserversorgungssystems ab. Vorzugsweise umfasst das Hydraulikmodell jeweils Ersatzmodelle, auch als Effizienzmodelle bezeichnet, der jeweiligen Pumpstationen des Wasserversorgungssystems. Mit diesen Ersatzmodellen kann das Betriebsverhalten der Pumpstationen abgebildet werden. Ein Ersatzmodell kann beispielsweise ein Regressionsmodell sein.

Im nächsten Schritt S2 des Verfahrens werden anhand des Hydraulikmodells und mittels eines ersten Optimierungsverfahrens ressourcenoptimierte Druck- und Flusssollwerte für die Pumpstationen des Wasserversorgungssystems für einen vorgegebenen Prognosezeitraum ermittelt. Somit wird hierbei ein längerer Zeitraum betrachtet, um beispielsweise die Nutzung der Behälter korrekt abzubilden. Die Behälter stellen eine Speicherkapazität dar, die es erlaubt die Bereitstellung des Wassers und dessen Abnahme durch die Verbraucher zeitlich zu entkoppeln. Nur so können Verbrauchsspitzen abgefangen werden. Bei variablen Energiepreisen kann zudem das Pumpen in kostengünstigere Zeitfenster verschoben werden.

In anderen Worten, es wird, vorzugsweise ausgehend von einem aktuellen Zeitpunkt, für einen vorgegebenen Zeitraum, die Fluss- und Druckverteilung für das Wasserversorgungssystem anhand des Hydraulikmodells optimiert. Die ermittelten zeitaufgelöste Druck- und Flusssollwerte für die Pumpstationen des Wasserversorgungssystems werden ausgegeben.

Im nächsten Schritt S3 wird mindestens ein Pumpenmodell für mindestens eine Pumpstation eingelesen. Vorzugsweise wird für jede Pumpstation des Wasserversorgungssystem ein entsprechendes Pumpmodell eingelesen. Ein jeweilige Pumpmodell ist eingerichtet, ein Betriebsverhalten von Pumpvorrichtungen/Pumpen der Pumpstation abzubilden. Ein Pumpmodell kann beispielsweise eine Pumpenkennlinie bzw. Pumpenkurve für eine Pumpvorrichtung umfassen.

Im nächsten Schritt S4 werden für einen vorgegebenen Zeitpunkt ressourcenoptimierte Betriebsparameter für die Pumpvorrichtungen der Pumpstation anhand des Pumpmodells mittels eines zweiten Optimierungsverfahrens in Abhängigkeit des Druck- und Flusssollwerts dieser Pumpstation für den vorgegebenen Zeitpunkt ermittelt. Das zweite Optimierungsverfahren kann dabei beispielsweise auch gleich dem ersten Optimierungsverfahren sein. Vorzugsweise werden die ressourcenoptimierten Betriebsparameter zu einem aktuellen Zeitpunkt bestimmt. Dazu werden vorzugsweise die ressourcenoptimierten Druck- und/oder Flusssollwerte der betrachteten Pumpstation als Randbedingung für das zweite Optimierungsverfahren genutzt. Somit können die Berechnungsergebnisse aus dem ersten Optimierungsschritt S2 für die detaillierte Optimierung des Betriebsverhaltens der einzelnen Pumpen einer Pumpstation genutzt werden. Insbesondere werden die Betriebsparameter für die Pumpvorrichtungen derart ermittelt, dass die vorab ermittelten, ressourcenoptimierten Druck- und Flusssollwerte der jeweiligen Pumpstation zum vorgegebenen Zeitpunkt erfüllt sind.

Im nächsten Schritt S5 werden die ressourcenoptimierten Betriebsparameter zum Steuern der Pumpvorrichtungen der jeweiligen Pumpstation, und somit zum Steuern des Wasserversorgungssystems, ausgegeben.

Die Schritte S3 bis S5 des Verfahrens werden vorzugsweise für jede Pumpstation des Wasserversorgungssystems durchgeführt. Insbesondere kann hierbei jeweils bestimmt werden, welche der Pumpvorrichtungen der jeweiligen Pumpstation aktiviert werden soll. In anderen Worten können einzelne Pumpvorrichtungen einer Pumpstation in Abhängigkeit des ermittelten Druck- und Flusssollwerts dieser Pumpstation selektiert werden und lediglich für die selektierten Pumpvorrichtungen ressourcenoptimierte Betriebsparameter ermittelt werden.

Außerdem können das Hydraulikmodell bzw. die Ersatzmodellen/Effizienzmodellen mittels der Optimierungsergebnisse aus den Schritten S3 bis S5 aktualisiert werden, um diese an ein dynamisches Verhalten des Wasserversorgungssystems anzupassen.

Die Verfahrensschritte S2 bis S5 können insbesondere für einen nachfolgenden Prognosezeitraum nach einem vorgegeben Zeitschritt wiederholt werden.

Im nächsten Schritt S6 des Verfahrens können die Pumpvorrichtungen der Pumpstationen gemäß der ermittelten ressourcenoptimierten Betriebsparameter gesteuert werden. Bei einer erneuten Iteration der Verfahrensschritte S2 bis S5 können demnach aktualisierte Betriebsparameter ausgegeben werden.

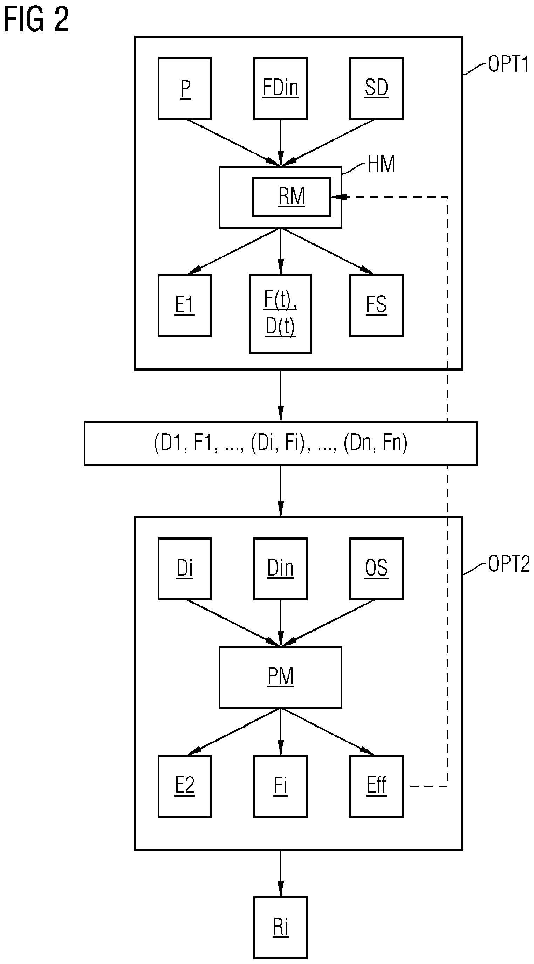

Figur 2 zeigt ein weiteres Ausführungsbeispiel des erfindungsgemäßen Verfahrens zur Steuerung einer Druck- und Flussverteilung eines Wasserversorgungssystems in Blockdarstellung.

Das Verfahren umfasst zwei Optimierungsebenen. Auf der ersten Optimierungsebene werden mittels eines ersten Optimierungsverfahrens OPT1 optimierte Druck- und Flusssollwerte ((D1, F1, ..., (Di, Fi), ..., (Dn, Fn)) für i = 1, ..n Pumpstationen des Wasserversorgungssystems ermittelt. Das Optimierungsverfahren OPT1 wird dazu auf ein computergestütztes Hydraulikmodell HM, das eine Fluss- und Druckverteilung im Wasserversorgungssystem abbildet, angewandt.

Dem Hydraulikmodell HM werden dafür zeit- und ortsaufgelöste Prognosewerte P von Entnahmen/Verbrauchern übergeben. Außerdem werden zeitaufgelöste Flusswerte und Ausgangsdrücke FDin der Pumpstationen des Wasserversorgungssystems und aktuelle Zustandsdaten SD von Behältern und zum Startzeitpunkt der Prognose, wie z.B. Füllstände von Reservoirs, dem Hydraulikmodell HM übergeben.

Das Hydraulikmodell HM umfasst mindestens ein Regressionsmodell RM einer Pumpstation des Wasserversorgungssystems, wobei das Regressionsmodell RM die Effizienz der Pumpstation beschreibt.

Mit dem Hydraulikmodell HM können für einen vorgegebenen Prognosezeitraum zeitaufgelöste Flüsse F(t) und Drücke D(t) im Wasserversorgungssystems, den Energiebedarf E1 für die Regulierung der Flüsse und Drücke und Behälterfüllstände FS ermittelt werden. In anderen Worten, das Hydraulikmodell HM umfasst das dynamische Verhalten des Wasserversorgungssystems über den Prognosezeitraum.

Anhand des Hydraulikmodells HM werden mittels des ersten Optimierungsverfahrens OPT1 ressourcenoptimierte Druck- und Flusssollwerte ((D1, F1, ..., (Di, Fi), ..., (Dn, Fn)) für die jeweiligen Pumpstationen des Wasserversorgungssystems für den vorgegebenen Prognosezeitraum berechnet. Dafür werden die Flüsse und Ausgangsdrücke der Pumpstationen, d.h. die Optimierungsvariablen, im Prognosezeitraum so bestimmt, dass die Flüsse und Drücke im Wasserversorgungssystem zu allen Zeitpunkten Beschränkungen einhalten (Randbedingungen der Optimierung) sowie Behälterfüllstände in vorgegebenen Grenzen bleiben, und der Energiebedarf und/oder die Kosten optimal sind. Der Energiebedarf und/oder die Kosten sind demnach die Zielfunktion dieser Optimierung.

Die so ermittelten Druck- und Flusssollwerte ((D1, F1, ..., (Di, Fi), ..., (Dn, Fn)) für die jeweiligen Pumpstationen des Wasserversorgungssystems werden für die zweite Optimierung bereitgestellt. Der zweite Optimierungsschritt wird vorzugsweise für jede Pumpstation durchgeführt. Vorzugsweise wird der zweite Optimierungsschritt für einen aktuellen Zeitpunkt und/oder den Zeitpunkt, für den eine konkrete Steuerungsentscheidung bezüglich des Betriebs der Pumpen ansteht, durchgeführt.

Für jede Pumpstation (1=1, ..., n) wird ein Pumpenmodell PM bereitgestellt, dass beispielsweise mindestens eine Pumpenkennlinie für eine Pumpe umfasst. Dem Pumpenmodell PM wird der Drucksollwert Di, der im vorhergehenden Optimierungsschritt für diese Pumpstation bestimmt wurde, als Ausgangsdruck für den betrachteten Zeitpunkt übergeben. Außerdem wird dem Pumpenmodell PM ein Eingangsdruck Din der Pumpen der Pumpstation und Informationen über den Betriebszustand OS der Pumpen übergeben. Mittels des Pumpenmodells kann ein Fluss, Energiebedarf E2 und ein Effizienzwert Eff der Pumpstation ermittelt werden.

Mittels des zweiten Optimierungsverfahrens OPT2 kann ein Betriebszustand der Pumpen (Optimierungsvariable) derart bestimmt werden, dass ein Flusswert mindestens den Flusssollwert Fi der Pumpstation aus dem ersten Optimierungsschritt für den betrachteten Zeitpunkt erzielt und dabei der Energiebedarf dieser Pumpstation optimal ist. In anderen Worten, der Flusssollwert Fi aus dem ersten Optimierungsschritt ist hier Randbedingung der zweiten Optimierung OPT2. Aus dem derart ermittelten Betriebszustand können Betriebsparameter Ri für die jeweilige Pumpstation abgeleitet und für die Steuerung der Pumpstation bereitgestellt werden. Außerdem kann der ermittelte Effizienzwert Eff zur Aktualisierung des Regressionsmodells RM für die entsprechende Pumpstation genutzt werden, um dieses an das dynamische Betriebsverhalten des Wasserversorgungssystems anzupassen.

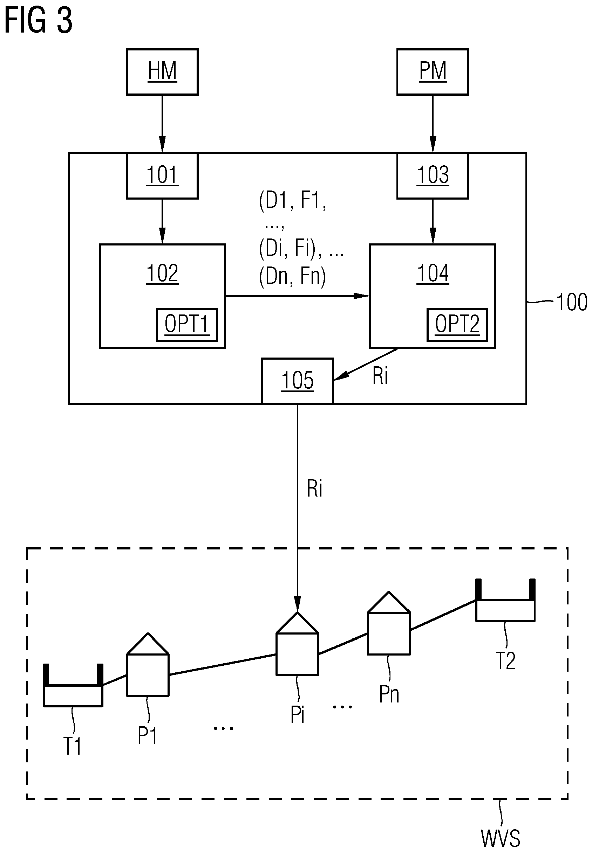

Figur 3 zeigt ein Ausführungsbeispiel der erfindungsgemäßen Vorrichtung 100 zur Steuerung einer Druck- und Flussverteilung eines Wasserversorgungssystems WVS, wie z.B. eine Pipeline. Das Wasserversorgungssystem umfasst eine Vielzahl von Pumpstationen PS1, ..., PSi, ..., PSn und mehrere Tanks T1, T2. Die Vorrichtung 100 ist insbesondere derart eingerichtet, die Schritte eines erfindungsgemäßen Verfahrens, wie beispielhaft anhand der Figuren 1 und 2 erläutert, auszuführen. Die Vorrichtung und/oder ihre Module können insbesondere in Software und/oder Hardware ausgestaltet sein.

Die Vorrichtung 100 umfasst eine erste Schnittstelle 101, die derart eingerichtet ist, ein computergestütztes Hydraulikmodell HM des Wasserversorgungssystems WVS einzulesen, wobei das computergestützte Hydraulikmodell HM eingerichtet ist, eine zeitabhängige Druck- und Flussverteilung des Wasserversorgungssystems abzubilden.

Die Vorrichtung 100 umfasst weiter ein erstes Optimierungsmodul 102, das derart eingerichtet ist, ressourcenoptimierte Druck- und Flusssollwerte (D1,F1),..., (Di,Fi),..., (Dn,Fn) für die Pumpstationen P1, ..., Pn des Wasserversorgungssystems für einen vorgegebenen Prognosezeitraum anhand des computergestützten Hydraulikmodells HM mittels eines ersten Optimierungsverfahrens OPT1 zu ermitteln.

Die Vorrichtung 100 umfasst weiter eine zweite Schnittstelle 103, die derart eingerichtet ist, ein Pumpenmodell PM, wie z.B. eine Pumpenkennlinie, für jede Pumpstation P1, ..., Pn, einzulesen. Dabei ist das jeweilige Pumpenmodell PM eingerichtet, ein Betriebsverhalten von Pumpvorrichtungen der jeweiligen Pumpstation abzubilden, d.h. für jede Pumpstation kann insbesondere ein anderes Pumpenmodell eingelesen werden.

Die Vorrichtung 100 umfasst weiter ein zweites Optimierungsmodul 104, das derart eingerichtet ist, ressourcenoptimierte Betriebsparameter Ri für die Pumpvorrichtungen jeder Pumpstation anhand des Pumpenmodells PM zu einem vorgegebenen Zeitpunkt mittels eines zweiten Optimierungsverfahrens OPT2 in Abhängigkeit des Druck- und Flusssollwerts dieser Pumpstation für den vorgegebenen Zeitpunkt, zu ermitteln. In Figur 3 wird beispielhaft die Optimierung für die Pumpstation Pi gezeigt.

Die ressourcenoptimierten Betriebsparameter Ri für die Pumpstation Pi wird von einem Ausgabemodul 105 der Vorrichtung 100 zum Steuern der Pumpvorrichtungen der Pumpstation ausgeben.

Beispielsweise können die ressourcenoptimierten Betriebsparameter an eine Steuerungseinheit des Wasserversorgungssystems übermittelt werden, um die Pumpen entsprechend zu steuern.

Die Erfindung ist nicht auf die beschriebenen Ausführungsbeispiele beschränkt.

## Patentansprüche

1. Computerimplementiertes Verfahren zur Steuerung einer Druck- und Flussverteilung eines Wasserversorgungssystems (WVS), das eine Vielzahl von Pumpstationen umfasst, mit den Verfahrensschritten:
(a) Einlesen (S1) eines computergestützten Hydraulikmodells (HM) des Wasserversorgungssystems, wobei das computergestützte Hydraulikmodell eingerichtet ist, eine zeitabhängige Druck- und Flussverteilung des Wasserversorgungssystems abzubilden,
(b) Ermitteln (S2) von ressourcenoptimierten Druck- und Flusssollwerten ((D1,F1),..., (Di,Fi),..., (Dn,Fn)) für die Pumpstationen (P1, ..., Pn) des Wasserversorgungssystems für einen vorgegebenen Prognosezeitraum anhand des computergestützten Hydraulikmodells (HM) mittels eines ersten Optimierungsverfahrens (OPT1),
(c) Einlesen (S3) eines computergestützten Pumpenmodells (PM) für eine Pumpstation (Pi), wobei das Pumpenmodell eingerichtet ist, ein Betriebsverhalten von Pumpvorrichtungen der Pumpstation (Pi) abzubilden,
(d) Ermitteln (S4) von ressourcenoptimierten Betriebsparametern (Ri) für die Pumpvorrichtungen der Pumpstation (Pi) anhand des computergestützten Pumpenmodells (PM) zu einem vorgegebenen Zeitpunkt mittels eines zweiten Optimierungsverfahrens (OPT2) in Abhängigkeit des Druck- und Flusssollwerts dieser Pumpstation für den vorgegebenen Zeitpunkt zeitlich nach dem Verfahrensschritt des Ermittelns (S2) von ressourcenoptimierten Druck- und Flusssollwerten für die Pumpstationen,
und
(e) Ausgeben (S5) der ressourcenoptimierten Betriebsparametern (Ri) zum Steuern der Pumpvorrichtungen der Pumpstation (Pi), wobei mittels des zweiten Optimierungsverfahrens ein Effizienzwert der Pumpstation ermittelt wird, das computergestützte Hydraulikmodell (HM) anhand des Effizienzwerts der Pumpstation aktualisiert und zur Ermittlung der ressourcenoptimierten Druck- und Flusssollwerte für die Pumpstationen des Wasserversorgungssystems genutzt wird.

2. Computerimplementiertes Verfahren nach Anspruch 1, wobei die ressourcenoptimierten Druck- und/oder Flusssollwerte der Pumpstation als Randbedingungen für das zweite Optimierungsverfahren (OPT2) genutzt werden.

3. Computerimplementiertes Verfahren nach einem der vorhergehenden Ansprüche, wobei die Betriebsparameter für die Pumpvorrichtungen derart ermittelt werden, dass die ressourcenoptimierten Druck- und Flusssollwerte der Pumpstation zum vorgegebenen Zeitpunkt erfüllt sind.

4. Computerimplementiertes Verfahren nach einem der vorhergehenden Ansprüche, wobei einzelne Pumpvorrichtungen der Pumpstation (Pi) in Abhängigkeit des ermittelten Druck- und Flusssollwerts dieser Pumpstation selektiert werden und lediglich für die selektierten Pumpvorrichtungen ressourcenoptimierte Betriebsparameter ermittelt werden.

5. Computerimplementiertes Verfahren nach einem der vorhergehenden Ansprüche, wobei die Verfahrensschritte (c) bis (e) für jede Pumpstation des Wasserversorgungssystems durchgeführt wird.

6. Computerimplementiertes Verfahren nach einem der vorhergehenden Ansprüche, wobei die Verfahrensschritte (b) bis (d) nach einem vorgegebenen Zeitschritt iteriert werden.

7. Computerimplementiertes Verfahren nach einem der vorhergehenden Ansprüche, wobei Pumpstationen des Wasserversorgungssystems im computergestützten Hydraulikmodell des Wasserversorgungssystems mittels Ersatzmodellen abgebildet werden.

8. Computerimplementiertes Verfahren nach einem der vorhergehenden Ansprüche, wobei das Pumpenmodell Pumpenkennlinien der Pumpvorrichtungen umfasst.

9. Computerimplementiertes Verfahren nach einem der vorhergehenden Ansprüche, wobei die Pumpvorrichtungen der Pumpstation mittels der ressourcenoptimierten Betriebsparameter gesteuert wird (S6).

10. Vorrichtung (100) zur Steuerung einer Druck- und Flussverteilung eines Wasserversorgungssystems, das eine Vielzahl von Pumpstationen umfasst, umfassend
- eine erste Schnittstelle (102), die derart eingerichtet ist, ein computergestütztes Hydraulikmodell des Wasserversorgungssystems einzulesen, wobei das computergestützte Hydraulikmodell eingerichtet ist, eine zeitabhängige Druck- und Flussverteilung des Wasserversorgungssystems abzubilden,
- ein erstes Optimierungsmodul (102), das derart eingerichtet ist, ressourcenoptimierte Druck- und Flusssollwerte ((D1,F1),..., (Di,Fi),..., (Dn,Fn)) für die Pumpstationen (P1, ..., Pn) des Wasserversorgungssystems für einen vorgegebenen Prognosezeitraum anhand des computergestützten Hydraulikmodells (HM) mittels eines ersten Optimierungsverfahrens (OPT1) zu ermitteln,
- eine zweite Schnittstelle (103), die derart eingerichtet ist, ein Pumpenmodell (PM) für eine Pumpstation einzulesen, wobei das Pumpenmodell eingerichtet ist, ein Betriebsverhalten von Pumpvorrichtungen der Pumpstation abzubilden,
- ein zweites Optimierungsmodul (104), das derart eingerichtet ist, ressourcenoptimierte Betriebsparameter für die Pumpvorrichtungen der Pumpstation (Pi) anhand des Pumpenmodells (PM) zu einem vorgegebenen Zeitpunkt mittels eines zweiten Optimierungsverfahrens (OPT2) in Abhängigkeit des Druck- und Flusssollwerts dieser Pumpstation für den vorgegebenen Zeitpunkt zeitlich nach dem Ermitteln von ressourcenoptimierten Druck- und Flusssollwerten für die Pumpstationen durch das erste Optimierungsmodul, zu ermitteln,
und
- ein Ausgabemodul (105), das derart eingerichtet ist, die ressourcenoptimierten Betriebsparameter (Ri) zum Steuern der Pumpvorrichtungen der Pumpstation auszugeben, wobei mittels des zweiten Optimierungsverfahrens ein Effizienzwert der Pumpstation ermittelt wird, das computergestützte Hydraulikmodell (HM) anhand des Effizienzwerts der Pumpstation aktualisiert und zur Ermittlung der ressourcenoptimierten Druck- und Flusssollwerte für die Pumpstationen des Wasserversorgungssystems genutzt wird.

11. Computerprogrammprodukt, das direkt in einen programmierbaren Computer ladbar ist, umfassend Programmcodeteile, die bei der Ausführung des Programms durch einen Computer diesen veranlassen, die Schritte eines Verfahrens nach einem der Ansprüche 1 bis 8 auszuführen.

## Claims

1. Computer-implemented method for controlling a distribution of pressure and flow in a water supply system (WVS) which comprises a plurality of pumping stations, comprising the method steps:
(a) reading in (S1) a computer-assisted hydraulic model (HM) of the water supply system, wherein the computer-assisted hydraulic model is designed to map a time-dependent distribution of pressure and flow in the water supply system,
(b) determining (S2) resource-optimised pressure and flow target values ((D1,F1),..., (Di,Fi),..., (Dn,Fn)) for the pumping stations (P1, ..., Pn) in the water supply system for a specified forecast period using the computer-assisted hydraulic model (HM) by means of a first method of optimisation (OPT1),
(c) reading in (S3) a computer-assisted pumping model (PM) for a pumping station (Pi), wherein the pumping model is designed to map an operational behaviour of pumping devices in the pumping station (Pi),
(d) determining (S4) resource-optimised operating parameters (Ri) for the pumping devices in the pumping station (Pi) using the computer-assisted pumping model (PM) at a specified time by means of a second method of optimisation (OPT2) as a function of the pressure and flow target value of this pumping station for the specified time after the method step of determining (S2) resource-optimized pressure and flow target values for the pumping stations,
and
(e) outputting (S5) the resource-optimised operating parameters (Ri) for controlling the pumping devices in the pumping station (Pi), wherein by means of the second method of optimisation an efficiency value of the pumping station is determined, the computer-assisted hydraulic model (HM) is updated using the efficiency value of the pumping station and is used for determining the resource-optimised pressure and flow target values for the pumping stations in the water supply system.

2. Computer-implemented method according to claim 1, wherein the resource-optimised pressure and/or flow target values of the pumping station are used as boundary conditions for the second method of optimisation (OPT2).

3. Computer-implemented method according to one of the preceding claims, wherein the operating parameters for the pumping devices are determined, such that the resource-optimised pressure and flow target values of the pumping station are satisfied at the specified time.

4. Computer-implemented method according to one of the preceding claims, wherein individual pumping devices in the pumping station (Pi) are selected as a function of the determined pressure and flow target value of this pumping station and resource-optimised operating parameters are determined only for the selected pumping devices.

5. Computer-implemented method according to one of the preceding claims, wherein the method steps (c) to (e) are performed for each pumping station in the water supply system.

6. Computer-implemented method according to one of the preceding claims, wherein the method steps (b) to (d) are iterated after a specified time step.

7. Computer-implemented method according to one of the preceding claims, wherein pumping stations in the water supply system are mapped in the computer-assisted hydraulic model of the water supply system by means of analogous models.

8. Computer-implemented method according to one of the preceding claims, wherein the pumping model comprises pump characteristics of the pumping devices.

9. Computer-implemented method according to one of the preceding claims, wherein the pumping devices in the pumping station are controlled (S6) by means of the resource-optimised operating parameters.

10. Device (100) for controlling a distribution of pressure and flow in a water supply system which comprises a plurality of pumping stations, comprising
- a first interface (102), which is designed so as to read in a computer-assisted hydraulic model of the water supply system, wherein the computer-assisted hydraulic model is designed to map a time-dependent distribution of pressure and flow in the water supply system,
- a first optimisation module (102), which is designed to determine resource-optimised pressure and flow target values ((D1,F1),..., (Di,Fi),..., (Dn,Fn)) for the pumping stations (P1, ..., Pn) in the water supply system for a specified forecast period using the computer-assisted hydraulic model (HM) by means of a first method of optimisation (OPT1),
- a second interface (103), which is designed to read in a pumping model (PM) for a pumping station, wherein the pumping model is designed to map an operational behaviour of pumping devices in the pumping station,
- a second optimisation module (104), which is designed to determine resource-optimised operating parameters for the pumping devices in the pumping station (Pi) using the pumping model (PM) at a specified time by means of a second method of optimisation (OPT2) as a function of the pressure and flow target value of this pumping station for the specified time after the resource-optimised pressure and flow target values for the pumping stations have been determined by the first optimisation module,
and
- an output module (105), which is designed to output the resource-optimised operating parameters (Ri) for controlling the pumping devices in the pumping station, wherein by means of the second method of optimisation an efficiency value of the pumping station is determined, the computer-assisted hydraulic model (HM) is updated using the efficiency value of the pumping station and is used to determine the resource-optimised pressure and flow target values for the pumping stations in the water supply system.

11. Computer program product, which can be loaded directly into a programmable computer, comprising program code sections which when the program is executed by a computer cause said computer to execute the steps of a method according to one of claims 1 to 8.

## Revendications

1. Procédé mis en oeuvre par ordinateur de commande d'une répartition de pression et d'écoulement d'un système (WVS) d'adduction d'eau, qui comprend une pluralité de postes de pompage, comprenant les stades de procédé :
(a) lecture (S1) d'un modèle (HM) hydraulique assisté par ordinateur du système d'adduction d'eau, dans lequel le modèle hydraulique assisté par ordinateur est agencé pour représenter une répartition de pression et d'écoulement du système d'adduction d'eau en fonction du temps,
(b) détermination (S2) de valeurs ((D1,F1),..., (Di, Fi),..., (Dn, Fn,)) de consigne de pression et d'écoulement optimisées en ressources pour les postes (P1, ..., Pn) de pompage du système d'adduction d'eau pendant un laps de temps de prévision donné à l'avance à l'aide du modèle (HM) hydraulique assisté par ordinateur, au moyen d'un premier procédé (OPT1) d'optimisation,
(c) lecture (S3) d'un modèle (PM) de pompage assisté par ordinateur pour un poste (Pi) de pompage, dans lequel le modèle de pompage est agencé pour représenter un comportement de fonctionnement de dispositifs de pompage du poste (Pi) de pompage,
(d) détermination (S4) de paramètres (Ri) de fonctionnement optimisés en ressources pour les dispositifs de pompage du poste (Pi) de pompage à l'aide du modèle (PM) de pompage assisté par ordinateur à un instant donné à l'avance, au moyen d'un deuxième procédé (OPT2) d'optimisation, en fonction de la valeur de consigne de pression et d'écoulement de ce poste de pompage pour l'instant donné à l'avance, après, dans le temps, le stade du procédé de la détermination (S2) de valeurs de consigne de pression et d'écoulement optimisées en ressources pour les postes de pompage,
et
(e) édition (S5) des paramètres (Ri) de fonctionnement optimisés en ressources pour la commande des dispositifs de pompage du poste (Pi) de pompage, dans lequel au moyen du deuxième procédé d'optimisation, on détermine une valeur d'efficience du poste de pompage, on met à jour le modèle (HM) hydraulique assisté par ordinateur à l'aide de la valeur d'efficience du poste de pompage et on l'utilise pour la détermination des valeurs de consigne de pression et d'écoulement optimisées en ressources pour le poste de pompage du système d'adduction d'eau.

2. Procédé mis en oeuvre par ordinateur suivant la revendication 1, dans lequel on utilise les valeurs de consigne de pression et/ou d'écoulement optimisées en ressources du poste de pompage comme conditions aux limites pour le deuxième procédé (OPT2) d'optimisation.

3. Procédé mis en oeuvre par ordinateur suivant l'une des revendications précédentes, dans lequel on détermine les paramètres de fonctionnement pour les dispositifs de pompage, de manière à satisfaire les valeurs de consigne de pression et d'écoulement optimisées en ressources du poste de pompage à l'instant donné à l'avance.

4. Procédé mis en oeuvre par ordinateur suivant l'une des revendications précédentes, dans lequel on sélectionne divers dispositifs de pompage du poste (Pi) de pompage, en fonction de la valeur de consigne de pression et d'écoulement déterminée de ce poste de pompage et on détermine des paramètres de fonctionnement optimisés en ressources seulement pour les dispositifs de pompage sélectionnés.

5. Procédé mis en oeuvre par ordinateur suivant l'une des revendications précédentes, dans lequel on effectue les stades (c) à (e) du procédé pour chaque poste de pompage du système d'adduction d'eau.

6. Procédé mis en oeuvre par ordinateur suivant l'une des revendications précédentes, dans lequel on réitère les stades (b) à (d) du procédé après un laps de temps donné à l'avance.

7. Procédé mis en oeuvre par ordinateur suivant l'une des revendications précédentes, dans lequel on représente, au moyen d'un modèle de remplacement, des postes de pompage du système d'adduction d'eau dans le modèle hydraulique assisté par ordinateur du système d'adduction d'eau.

8. Procédé mis en oeuvre par ordinateur suivant l'une des revendications précédentes, dans lequel le modèle de pompage comprend des caractéristiques de pompe des dispositifs de pompage.

9. Procédé mis en oeuvre par ordinateur suivant l'une des revendications précédentes, dans lequel on commande (S6) les dispositifs de pompage du poste de pompage au moyen des paramètres de fonctionnement optimisés en ressources.

10. Système (100) de commande d'une répartition de pression et d'écoulement d'un système d'adduction d'eau, qui comprend une pluralité de postes de pompage, comprenant
- une première interface (102), qui est agencée pour lire un modèle hydraulique assisté par ordinateur du système d'adduction d'eau, dans lequel le système hydraulique assisté par ordinateur est agencé pour représenter une répartition de pression et d'écoulement du système d'adduction d'eau en fonction du temps,
- un premier module (102) d'optimisation, qui est agencé pour déterminer des valeurs ((D1, F1),..., (Di, Fi),..., (Dn, Fn,)) de consigne de pression et d'écoulement optimisées en ressources pour les postes (P1, ..., Pn) de pompage du système d'adduction d'eau pendant un laps de temps de prévision donné à l'avance à l'aide du modèle (HM) hydraulique assisté par ordinateur, au moyen d'un premier procédé (OPT1) d'optimisation,
- une deuxième interface (103), qui est agencée pour lire un modèle (PM) de pompage pour un poste de pompage, dans lequel le modèle de pompage est agencé pour reproduire un comportement de fonctionnement de dispositifs de pompage du poste de pompage,
- un deuxième module (104) d'optimisation, qui est agencé pour déterminer des paramètres de fonctionnement en ressources pour les dispositifs de pompage du poste (Pi) de pompage à l'aide du modèle (PM) de pompage à un instant donné à l'avance, au moyen d'un deuxième procédé (OPT2) d'optimisation, en fonction de la valeur de consigne de pression et d'écoulement de ce poste de pompage pour l'instant donné à l'avance, après, dans le temps, la détermination de valeurs de consigne de pression et d'écoulement optimisées en ressources pour le poste de pompage par le premier module d'optimisation,
et
- un module (105) d'édition, qui est agencé pour éditer les paramètres (Ri) de fonctionnement optimisés en ressources pour la commande des dispositifs de pompage du poste de pompage, dans lequel au moyen du deuxième procédé d'optimisation, on détermine une valeur d'efficience du poste de pompage, on met à jour le modèle (HM) hydraulique assisté par ordinateur à l'aide de la valeur d'efficience du poste de pompage et on l'utilise pour la détermination des valeurs de consigne de pression et d'écoulement optimisées en ressources pour les postes de pompage du système d'adduction d'eau.

11. Produit de programme d'ordinateur, qui peut être chargé directement dans un ordinateur programmable, comportant des parties de code de programme, qui, lorsque le programme est réalisé par ordinateur, font que celles-ci exécutent les stades d'un procédé suivant l'une des revendications 1 à 8.
